# FASCICULE DE BREVET EUROPEEN

(11) **EP 1 950 155 B1**
(45) Date de publication et mention de la délivrance du brevet: **02.09.2009**
(21) Numéro de dépôt: 08300034.9
(22) Date de dépôt: 17.01.2008
(51) Int. Cl.: B65G 67/24, B65G 53/08, B60P 1/56

(54) **Véhicule equipé d'un dispositif de soufflerie pour l'évacuation de copeaux de bois**
Fahrzeug, das mit einem Gebläse zum Ausblasen von Holzspänen ausgestattet ist
Vehicle equipped with a blowing device for evacuating wood shavings

(30) Priorité: 19.01.2007 FR 0752753; 09.05.2007 FR 0754936
(43) Date de publication de la demande: 30.07.2008
(73) Titulaire: Romanet, Yves, 38150 Sonnay (FR)
(72) Inventeur: Romanet, Yves, 38150 Sonnay (FR)
(74) Mandataire: Dupuis, François

(56) Documents cités:
- WO-A-97/16385
- GB-A- 1 298 094
- US-A- 3 424 438

## Description

L'invention se rattache au secteur technique des véhicules du type camions qui sont susceptibles de recevoir des copeaux de bois pour être vidés ensuite dans des silos de chauffage ou similaires.

Il existe déjà sur le marché des véhicules de type camions généralement de charge de 30 tonnes ou proches qui collectent les copeaux de bois après broyage des bois dans les forêts et lieux de collecte similaires. Ces véhicules sont ainsi aménagés à l'arrière de leur partie benne et en fond de l'intérieur avec une vis d'Archimède qui dirige les copeaux dans un réceptacle situé en partie basse du véhicule, tandis qu'une soufflerie par ventilation agit pour projeter les copeaux à l'extérieur par un conduit d'évacuation. Cette technologie exige la mise en oeuvre de soufflerie de grande puissance de l'ordre de 50 CV. Cela génère un environnement de poussières important et surtout une énergie très conséquente avec des aménagements de véhicules lourds et coûteux et volumineux. En outre, cela exige un silo récepteur de volume important pour éviter, lors du transfert, tous risques d'explosion.

Un autre inconvénient réside dans le fait que les véhicules souffleurs sont conçus et aménagés de manière définitive et qu'il n'y a aucune possibilité d'adaptabilité. Le souffleur requiert une puissance importante, comme indiqué précédemment, car elle a pour fonction de provoquer la prise des copeaux en provenance du réceptacle de collecte, et de les évacuer à une distance qui peut être de l'ordre de 10 à 15 mètres en fonction de l'éloignement du véhicule par rapport au silo de chauffage collectant lesdits copeaux.

En égard de l'ensemble de ces contraintes, le demandeur s'est intéressé à réfléchir à une autre solution ayant pour objectifs de simplifier la conception des véhicules souffleurs, d'exiger une puissance moindre de la soufflerie, selon les applications et besoins des opérateurs.

Ainsi, le but recherché était la conception d'un véhicule souffleur de copeaux de bois, plus léger, de moindre coût et susceptible d'être adapté pour la réception et l'adaptation de puissance de soufflage variée selon les besoins.

La solution apportée par le demandeur répond à ces exigences et paramètres de manière simple et plus économique comparativement aux véhicules actuels utilisés de charge de 30 tonnes.

Selon une première caractéristique, le véhicule souffleur de copeaux du type comprenant intérieurement une vis d'Archimède pour l'évacuation vers le fond de bennes des copeaux et d'un groupe ventilateur de projection de copeaux est remarquable en ce qu'il comprend un tablier support solidarisé à une structure porteuse associée à la benne, ledit tablier étant agencé pour recevoir un groupe ventilateur et un groupe propulseur collecteurs de déchets de copeaux en provenance de la benne, et en ce que les lesdits groupes ventilateur et propulseur sont reliés l'un à l'autre pour autoriser l'évacuation des copeaux par l'effet de propulsion donnée par le groupe ventilateur.

Selon une autre caractéristique, le véhicule souffleur de copeaux du type tablier reçoit dans sa partie supérieure un groupe ventilateur et, sous jacent dans sa partie inférieure, un groupe propulseur collecteur des déchets de copeaux en provenance de la benne, et en ce que lesdits groupes ventilateur et propulseur sont reliés l'un à l'autre par un circuit de distribution d'air et de copeaux comprenant deux conduits en prise respectivement sur chacun des groupes ventilateur et propulseur et débouchant sur un conduit de sortie et d'évacuation, et en ce que les copeaux sont collectés et évacués par le groupe propulseur à grande vitesse et mixés ensuite avec l'air en provenance du groupe ventilateur, ce dernier prenant le relais pour assurer la projection finale des copeaux.

Selon une autre caractéristique, le groupe ventilateur et le groupe propulseur collecteur de déchets de copeaux sont intégrés dans une même structure réceptrice montée sur le tablier, ladite structure étant aménagée pour autoriser la collecte des déchets de copeaux, et l'arrivée d'air pour la distribution et l'évacuation par un conduit de sortie des copeaux sous l'effet combiné du fonctionnement desdits groupes ventilateur et propulseur.

Ces caractéristiques et d'autres encore ressortiront bien de la suite de la description.

Pour fixer l'objet de l'invention illustrée aux figures des dessins où :
- La figure 1 est une vue à caractère schématique illustrant l'arrière du véhicule souffleur, selon l'invention, aménagé avec le dispositif de l'invention, selon une première mise en oeuvre.
- La figure 2 est une vue à caractère schématique illustrant les différents composants du dispositif, selon la mise en oeuvre de la figure 1.
- La figure 3 est une vue à caractère schématique illustrant le véhicule en situation de remplissage de copeaux de bois, le dispositif ne fonctionnant pas.
- La figure 4 est une vue du véhicule en situation d'évacuation des copeaux de bois.
- La figure 5 est une vue en perspective à caractère schématique illustrant l'intérieur de la benne et des composants d'approvisionnement des copeaux en vue de leur évacuation.
- La figure 6 est une vue à caractère schématique illustrant l'arrière du véhicule souffleur selon l'invention aménagé avec le dispositif selon une seconde mise en oeuvre.
- La figure 7 est une vue en coupe montrant l'aménagement de la structure réceptrice du dispositif de l'invention, selon la figure 6.

Afin de rendre plus concret l'objet de l'invention, on le décrit maintenant d'une manière non limitative illustré aux figures des dessins.

Le véhicule est référencé dans son ensemble par V étant équipé d'une benne (1) réceptrice des copeaux de bois (2) en provenance du broyage en forêts ou d'autres lieux de transformation et de découpe des arbres, arbustes et similaires. La benne est articulée et basculée vers l'arrière par tous moyens connus pour permettre l'évacuation des copeaux en fond de benne.

Selon l'invention, la partie arrière de la benne est susceptible de recevoir un tablier support (3) de formes et dimensions correspondant à la largeur de la benne et fermant la benne à l'arrière. Le tablier support est monté fixe par des moyens de fixation sur une structure porteuse (4) de configuration triangulaire fixée à la benne de sorte qu'en position relevée de celle-ci, par évacuation des copeaux, le tablier support soit en position verticale, de préférence en situation de rentrée intérieure dans la benne. Cette structure porteuse est démontable par rapport à la benne par tous moyens appropriés. Le tablier est ainsi agencé pour recevoir un groupe ventilateur (5) et un groupe propulseur (7) collecteur des déchets de copeaux en provenance de la benne; lesdits groupes étant reliés l'un à l'autre pour autoriser l'évacuation des copeaux par l'effet de propulsion donné par le groupe ventilateur.

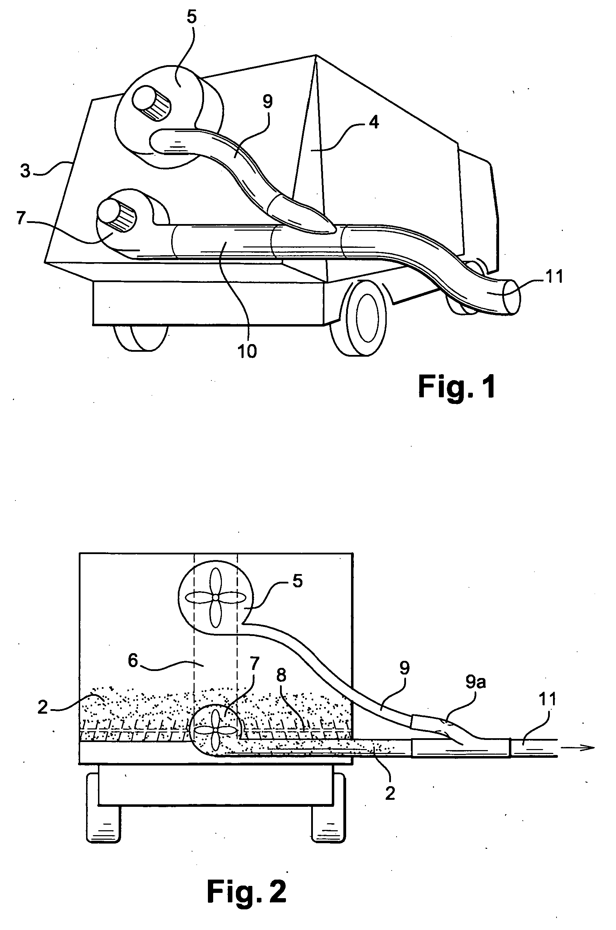

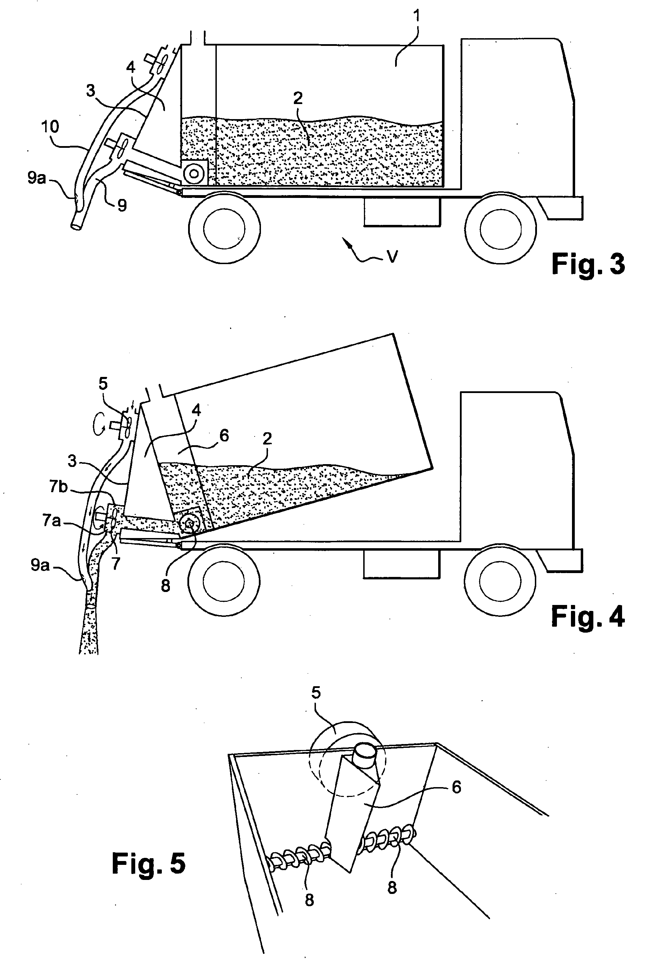

Une première mise en oeuvre de l'invention est illustrée aux figures 1 à 5.
Le tablier support est aménagé pour recevoir, dans sa partie supérieure, un groupe ventilateur (5) prélevant l'air ambiant à partir d'une colonne intérieure (6) disposée dans le fond de benne débouchant dans sa partie supérieure et, sous jacent, en partie inférieure, un groupe propulseur (7) des copeaux. Ceux-ci sont fixés au tablier de toute manière appropriée. Le groupe ventilateur est alimenté par une motorisation non représentée aux dessins. Le groupe propulseur est alimenté par des moyens hydrauliques non représentés aux dessins et qui sont en liaison, par exemple, avec la commande hydraulique de relevage et d'abaissement de la benne. En variante, le groupe propulseur (7) peut être entraîné par un même ensemble de motorisation avec le groupe ventilateur selon un besoin total en puissance de 20 CV. Le groupe ventilateur (5) est de préférence, comme représenté figures 1 et 2, dans un plan supérieur et en alignement vertical par rapport au groupe propulseur précité, les deux étant en prise avec la colonne (6). Ce groupe propulseur (7) est ainsi situé en partie basse du véhicule en étant aménagé avec un réceptacle (7a) de réception des copeaux de bois acheminés par un ensemble de deux vis d'Archimède (8) disposés opposés en fond intérieur de benne, comme représenté figure 5. Le groupe propulseur comprend un souffleur (7b) qui a pour fonction d'éjecter les copeaux à une grande vitesse, de l'ordre de 300 à 400 km/h, avec donc une vitesse de projection initiale forte. Le groupe ventilateur (5) et le groupe propulseur (7) sont aménagés pour recevoir un circuit de distribution d'air et d'évacuation de copeaux comprenant des conduits (9 - 10) qui sont susceptibles de se raccorder pour mixer et combiner leurs effets en vue de la projection des copeaux en éloignement du véhicule jusqu'à des distances de l'ordre de 10 à 15 mètres en fonction de l'emplacement du silo de collecte. A cet effet, les deux groupes ventilateur (5) et propulseur (7) sont aménagés en sortie avec des portées tubulaires sur lesquels s'ajustent les courants (9 - 10). Ces derniers définissent un circuit de distribution d'air et de copeaux dans une configuration sensiblement en Y avec un conduit de sortie (11) et d'évacuation de l'air et des copeaux après leur branchement. Le conduit (9) associé au groupe ventilateur (5) peut être réalisé avec un flexible, tandis que le conduit (10) d'évacuation des copeaux projetés par le groupe propulseur doit être au contraire rigide avec un agencement sécuritaire renforcé compte tenu de la vitesse de projection des copeaux.

Selon une disposition particulière et avantageuse pour favoriser l'évacuation des copeaux, il est prévu d'agencer le conduit (9) associé au groupe ventilateur près de sa zone de raccordement avec le conduit (10) d'évacuation des copeaux avec une zone intérieure (9a) rétrécie créant de ce fait un effet venturi ce qui crée une élévation de la vitesse de l'air en sortie de conduit (9) et aspiration des copeaux pour les entraîner dans la veine d'air dans le conduit de sortie (11). En quelque sorte, le flux d'air initié par le groupe ventilateur (5) va prendre le relais du groupe propulseur, les copeaux étant déjà projetés à une certaine vitesse pour les évacuer ensuite. Il y a donc une étroite combinaison de fonction, le groupe propulseur (7) agissant pour créer un effet de projection à grande vitesse des copeaux en sortie de benne, le groupe ventilateur (5) prenant le relais ensuite pour permettre l'évacuation à 10 ou 15 mètres. De préférence, le conduit de sortie (11) est dans l'alignement axial du conduit (9) pour ne pas freiner la projection d'air. Le conduit (11) peut être un flexible. Le circuit de distribution des copeaux est établi pour être renforcé par tous moyens appropriés à des fins sécuritaires.

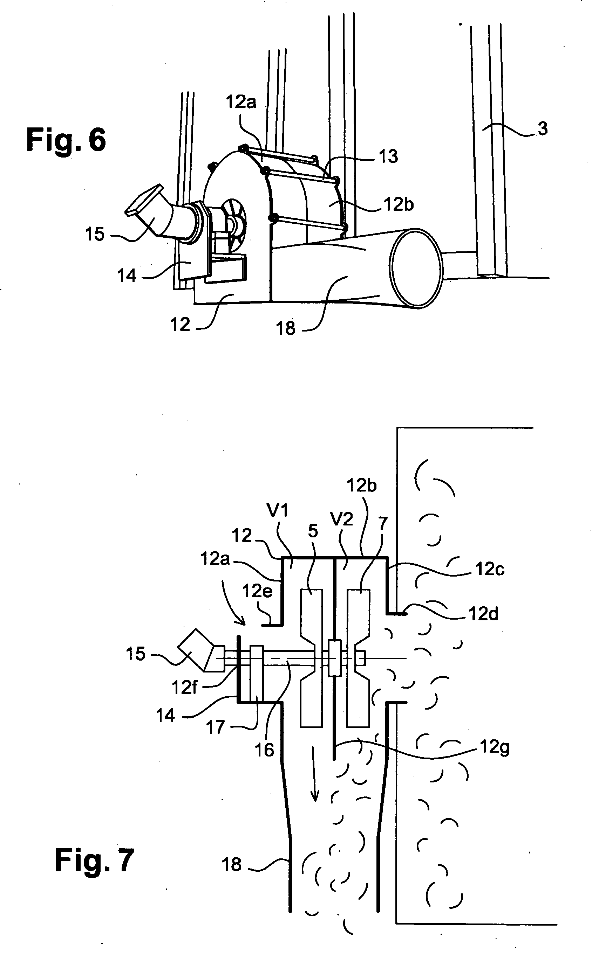

Selon une autre variante illustrée aux figures 6 et 7, le groupe propulseur (7) collecteur de déchets et le groupe ventilateur (5) sont intégrés dans une même structure réceptrice (12) montée sur le tablier. Cette structure a la configuration d'un caisson parallélépipédique réalisé par exemple en deux demi-parties (12a) (12b) solidarisées entre elles par des tirants (13) de liaison. Une face transversale (12c) dudit caisson est solidaire du tablier par tous moyens appropriés et présente une ouverture (12d) pour être en regard de l'intérieur de la benne et constituer l'ouverture d'entrée des copeaux en provenance de la vis d'Archimède (8). L'autre demi-partie (12a) côté extérieur est agencée pour recevoir une base support (14) profilée en L et un portique support (17) pour autoriser le positionnement et fixation d'un groupe moteur unique (15). La face transversale (12e) de la demi-partie (12a) présente une ouverture (12f) pour le passage de l'arbre (16) du groupe moteur et une ouverture pour la rentrée d'air.

Le caisson (12) présente intérieurement une paroi verticale (12g) de séparation entre les demi-parties du caisson précité, cette paroi étant établie partiellement sur la longueur du caisson. L'arbre (16) du groupe moteur (15) débouche dans les deux volumes (V1-V2) successifs séparés par la paroi (12g) en étant maintenu par tous moyens supports et de roulement nécessaire. Le caisson (12) reçoit dans chacune des chambres définies par les volumes (V1, V2) le groupe ventilateur (5) et le groupe propulseur (7). Ainsi les turbines sont montées sur l'arbre moteur, et tournent en même temps à la même vitesse. La dimension des turbines desdits groupe (5 et 7) est établie pour rester en deçà de l'extrémité de la plaque de séparation. En d'autres termes, les flux générés au départ sont indépendants, puis se regroupent étroitement en sortie du caisson pour la projection des déchets de copeaux. Un conduit (18) est emmanché et fixé de toute manière appropriée en sortie du caisson.

Dans une mise en oeuvre avantageuse, la structure réceptrice en forme de caisson peut elle-même être montée sur une bascule pivotante disposée sur un châssis porteur fixe associé au tablier du véhicule. Cette bascule permet l'orientation angulaire sur un quart de tour pour relevage de l'horizontal à la verticale, selon une amplitude désirée, en vue de la projection des copeaux. Des moyens d'indexation et de verrouillage permettent d'ajuster cette orientation angulaire. Cette disposition permet ainsi l'évacuation et la projection des copeaux dans des silos de grande hauteur. C'est donc l'ensemble des groupes ventilateurs (5) et propulseur (7) qui bascule dans un mouvement de relevage déterminé dans son amplitude par l'opérateur en fonction de la hauteur des silos récepteur des copeaux.

La solution de cette mise en oeuvre est particulièrement performante. Le groupe moteur peut être à fonctionnement hydraulique.

Le dispositif, selon l'invention, offre ainsi de nombreux avantages par rapport à l'art antérieur.

Le premier réside dans la réduction considérable de la puissance nécessaire du groupe ventilateur qui est de l'ordre de 9 CV au lieu de 50 CV avec une consommation moindre. La dépose du tablier support du groupe ventilateur et propulseur est possible très facilement et l'on peut l'adapter sur un véhicule de 7,5 tonnes avec remise en place de la porte arrière du bennage. En outre, on peut concevoir avoir une gamme de plusieurs tabliers supports de dispositif de puissance variée et adaptable sur le véhicule facilement en fonction des besoins et applications.

On peut aussi envisager de ne pas mettre en fonctionnement le groupe ventilateur temporairement laissant la projection des copeaux par le seul groupe propulseur dans certaines situations de proximité de la zone réceptrice des copeaux évacués, ceci dans le cadre de la première mise en oeuvre.

Selon l'invention, il est aussi possible d'utiliser la présence de la colonne (6) pour permettre, par un conduit approprié, d'aspirer l'air et la poussière du silo, travaillant ainsi en circuit fermé.

## Revendications

1. Véhicule souffleur de copeaux du type comprenant intérieurement une vis d'Archimède pour l'évacuation vers le fond de bennes des copeaux et d'un groupe ventilateur de projection de copeaux **caractérisé en ce qu'**il comprend un tablier support (3) solidarisé à une structure porteuse (4) associée à la benne, ledit tablier étant agencé pour recevoir un groupe ventilateur (5) et un groupe propulseur (7) collecteurs de déchets de copeaux en provenance de la benne, et **en ce que** les lesdits groupes ventilateur (5) et propulseur (7) sont reliés l'un à l'autre pour autoriser l'évacuation des copeaux par l'effet de propulsion donnée par le groupe ventilateur.

2. Véhicule souffleur, selon la revendication 1, **caractérisé en ce qu'**il reçoit dans sa partie supérieure un groupe ventilateur (5) et, sous jacent dans sa partie inférieure, un groupe propulseur (7) collecteur des déchets de copeaux en provenance de la benne,
**et en ce que** lesdits groupes ventilateur et propulseur sont reliés l'un à l'autre par un circuit de distribution d'air et de copeaux comprenant deux conduits en prise respectivement sur chacun des groupes ventilateur et propulseur et débouchant sur un conduit de sortie et d'évacuation,
**et en ce que** les copeaux sont collectés et évacués par le groupe propulseur à grande vitesse et mixés ensuite avec l'air en provenance du groupe ventilateur, ce dernier prenant le relais pour assurer la projection finale des copeaux.

3. Véhicule, selon la revendication 1, **caractérisé en ce que** le conduit (9), en liaison avec le groupe ventilateur (5), présente, près de la zone de raccordement avec le conduit d'évacuation des copeaux, un rétrécissement créant un effet venturi.

4. Véhicule, selon les revendications 2 et 3 ensemble, **caractérisé en ce que** le circuit des conduits ( 9 - 10 - 11) a une configuration sensiblement en Y avec un alignement axial des conduits (9 - 11).

5. Véhicule, selon la revendication 1, **caractérisé en ce que** le groupe ventilateur (5) et le groupe propulseur (7) collecteur de déchets de copeaux sont intégrés dans une même structure réceptrice (12) montée sur le tablier (3), ladite structure étant aménagée pour autoriser la collecte des déchets de copeaux, et l'arrivée d'air pour la distribution et l'évacuation par un conduit de sortie (18) des copeaux sous l'effet combiné du fonctionnement desdits groupes ventilateur et propulseur.

6. Véhicule, selon la revendication 5, **caractérisé en ce que** la structure réceptrice (12) présente la configuration d'un caisson avec deux demi parties (12a) (12b) définissant des volumes intérieurs V1 et V2 pour la réception respective du groupe ventilateur (5) et du groupe propulseur (7) de copeaux, une paroi séparatrice (12g) délimitant lesdits volumes entre eux,
**et en ce que** lesdits volumes débouchent sur une sortie commune par un conduit (18) d'évacuation des copeaux,
**et en ce que** lesdits groupes (5 et.7) sont montés sur un même axe (16) associé à un seul groupe moteur (15) permettant leur fonctionnement connu,
**et en ce que** chaque demi partie (12a - 12b) est en communication par des ouvertures d'entrée d'air et d'entrée (12a) des copeaux.

7. Véhicule, selon la revendication 6, **caractérisé en ce que** la structure (12) présente deux demi parties (12a - 12b) solidarisées entre elles par des tirants (13), une face transversale (12c) du caisson étant solidarisée au tablier (3) et présentant une ouverture (12d) en regard de l'intérieur de la benne pour l'entrée des copeaux,
**et en ce que** l'autre partie (12a) est agencée avec une base support (14) et un portique support (17) pour autoriser le positionnement d'un groupe moteur unique (15).

8. Véhicule, selon l'une quelconque des revendications 5 à 7, **caractérisé en ce que** la structure réceptrice en forme de caisson est montée sur une bascule pivotante disposée sur un châssis porteur fixe associé au tablier du véhicule,
**et en ce que** la bascule permet l'orientation angulaire sur un quart de tour pour relevage de l'horizontal à la verticale selon une amplitude désirée en vue de la projection des copeaux,
**et en ce que** des moyens d'indexation et de verrouillage permettent d'ajuster cette orientation angulaire.

## Claims

1. Woodchip blower vehicle of the type comprising internally an Archimedes screw for discharging woodchips to the bottom of tipper bins and a woodchip projection ventilating unit **characterized in that** it comprises a support apron (3) secured to a load-bearing structure (4) associated with the bin, said apron being provided to receive a ventilating unit (5) and a propulsion unit (7) collecting woodchip waste coming from the bin, and **in that** said ventilating (5) and propulsion (7) units are connected to each other so that the woodchips can be discharged by the propulsion effect afforded by the ventilating unit.

2. Blower vehicle, as claimed in claim 1, **characterized in that** it receives in its upper part a ventilating unit (5) and, subjacent in its lower part, a propulsion unit (7) that collects woodchip waste coming from the bin,
and **in that** said ventilating and propulsion units are connected to each other by an air and woodchip distribution system comprising two pipes attached to each of the ventilating and propulsion units respectively and leading to an outlet and discharge pipe,
and **in that** the woodchips are collected and discharged by the propulsion unit at high speed and then mixed with the air coming from the ventilating unit, the latter taking over in order to ensure the final projection of the woodchips.

3. Vehicle, as claimed in claim 1, **characterized in that** the pipe (9), connected to the ventilating unit (5), has, near the area of connection with the woodchip discharge pipe, a contraction that creates a venturi effect.

4. Vehicle, as claimed in claims 2 and 3 together, **characterized in that** the pipe system (9 - 10 - 11) has a substantially Y-shaped configuration with an axial alignment of the pipes (9 - 11).

5. Vehicle, as claimed in claim 1, **characterized in that** the ventilating unit (5) and the propulsion unit (7) collecting woodchip waste are integrated into a single receiving structure (12) mounted on the apron (3), said structure being provided so that the woodchip waste can be collected and air can be brought in for distributing and discharging the woodchips via an outlet pipe (18) under the combined effect of the operation of said ventilating and propulsion units.

6. Vehicle, as claimed in claim 5, **characterized in that** the receiving structure (12) is configured as a box-type structure with two half parts (12a) (12b) defining internal volumes V1 and V2 for receiving the ventilating unit (5) and woodchip propulsion unit (7) respectively, a separating wall (12g) defining said volumes between them,
and **in that** said volumes lead to a common outlet via a woodchip discharge pipe (18),
and **in that** said units (5 and 7) are mounted on a single axis (16) associated with a single power unit (15) allowing their known operation,
and **in that** each half part (12a - 12b) is in communication via openings for the intake of air and the intake (12a) of woodchips.

7. Vehicle, as claimed in claim 6, **characterized in that** the structure (12) has two half parts (12a - 12b) secured to each other by tierods (13), one transverse face (12c) of the box structure being secured to the apron (3) and having an opening (12d) facing the inside of the bin for the woodchips to enter,
and **in that** the other part (12a) is provided with a support base (14) and a support gantry (17) to allow a single power unit to be positioned (15).

8. Vehicle, as claimed in any one of claims 5 to 7, **characterized in that** the box-shaped receiving structure is mounted on a swivelling rocker placed on a fixed load-bearing frame associated with the vehicle apron,
and **in that** the rocker allows angular steering over a quarter turn for lifting from the horizontal to the vertical according to a desired amplitude with a view to projecting the woodchips,
and **in that** indexing and locking means allow said angular steering to be adjusted.

## Patentansprüche

1. Fahrzeug mit einer Spangebläsevorrichtung, das innen eine Archimedische Schraube für die Abführung der Späne in den hinteren Teil von Kübeln und ein Ventilatoraggregat für den Auswurf von Spänen umfasst, **dadurch gekennzeichnet, dass** es eine Stützplatte (3) besitzt, die mit einer mit dem Kübel gekoppelten Tragestruktur (4) fest verbunden ist, wobei die Platte so gestaltet ist, um ein Ventilatoraggregat (5) und ein Schleuderaggregat (7) als Sammelkammer von Spanabfällen aus dem Kübel aufzunehmen, und dass das Ventilatoraggregat (5) und das Schleuderaggregat (7) miteinander verbunden sind, um die Abführung der Späne durch den vom Ventilatoraggregat vermittelten Schleudereffekt zu ermöglichen.

2. Fahrzeug mit Gebläsevorrichtung nach Anspruch 1, **dadurch gekennzeichnet, dass** es im oberen Teil ein Ventilatoraggregat (5) und darunter im unteren Teil ein Schleuderaggregat (7) als Sammelkammer von aus dem Kübel kommenden Spanabfällen aufnimmt,
und dass das Ventilatoraggregat und das Schleuderaggregat durch einen Verteilerkreis für Luft und Späne miteinander verbunden sind, der zwei Leitungen umfasst, die jeweils am Ventilatoraggregat bzw. Schleuderaggregat ansetzen und in eine aus- und abführende Leitung münden,
und dass die Späne vom Schleuderaggregat gesammelt und mit großer Geschwindigkeit abgeleitet und dann mit der Luft aus dem Ventilatoraggregat vermischt werden, wobei letzteres die Ablösung übernimmt, um den abschließenden Auswurf der Späne zu gewährleisten.

3. Fahrzeug nach Anspruch 1, **dadurch gekennzeichnet, dass** die mit dem Ventilatoraggregat (5) in Verbindung stehende Leitung (9) in der Nähe des Anschlussbereichs mit der spanabführenden Leitung eine Verengung aufweist, die einen Venturi-Effekt schafft.

4. Fahrzeug nach den Ansprüchen 2 und 3 gemeinsam, **dadurch gekennzeichnet, dass** der Kreis der Leitungen (9 - 10 - 11) ungefähr die Form eines Y hat, wobei die Leitungen (9 - 11) axial ausgerichtet sind.

5. Fahrzeug nach Anspruch 1, **dadurch gekennzeichnet, dass** das Ventilatoraggregat (5) und das Schleuderaggregat (7) als Sammelkammer von Spanabfällen in eine gemeinsame Aufnahmestruktur (12), die an der Platte (3) angebracht ist, integriert sind, wobei diese Struktur so gestaltet ist, um das Sammeln der Spanabfälle und die Luftzuleitung für die Verteilung und Ableitung der Späne durch eine ausführende Leitung (18) unter der kombinierten Wirkung des Betriebs des Ventilatoraggregats und des Schleuderaggregats zu ermöglichen.

6. Fahrzeug nach Anspruch 5, **dadurch gekennzeichnet, dass** die Aufnahmestruktur (12) die Form eines Kastens mit zwei Halbteilen (12a) (12b) aufweist, die Innenvolumina V1 und V2 für die Aufnahme des Ventilatoraggregats (5) bzw. des Spanschleuderaggregats (7) bilden, wobei eine Trennwand (12g) die besagten Rauminhalte voneinander abgrenzen,
und dass diese Rauminhalte über eine spanabführende Leitung (18) in einen gemeinsamen Ausgang münden,
und dass die Aggregate (5 und 7) auf der gleichen Achse (16) in Verbindung mit einem einzigen Motoraggregat (15), das ihre bekannte Funktionsweise ermöglicht, angebracht sind,
und dass die Halbteile (12a - 12b) durch Öffnungen für den Lufteinlass und den Einlass der Späne (12a) miteinander in Verbindung stehen.

7. Fahrzeug nach Anspruch 6, **dadurch gekennzeichnet, dass** die Struktur (12) zwei Halbteile (12a - 12b) aufweist, die durch Spannstangen (13) fest miteinander verbunden sind, wobei eine Querfläche (12c) des Kastens fest mit der Platte (3) verbunden ist und gegenüber dem Innenteil des Kübels eine Öffnung (12d) für den Einlass der Späne aufweist,
und dass der andere Teil (12a) mit einer Halterung (14) und einem Stützrahmen (17) für die Positionierung eines einzigen Motoraggregats (15) versehen ist.

8. Fahrzeug nach einem der Ansprüche 5 - 7, **dadurch gekennzeichnet, dass** die kastenförmige Aufnahmestruktur an einer Kippvorrichtung angebracht ist, die auf einem tragenden Rahmen in Verbindung mit der Platte des Fahrzeugs befestigt ist,
und dass die Kippvorrichtung nach einer für den Auswurf der Späne gewünschten Amplitude auf einer Vierteldrehung die Winkelausrichtung zum Anheben von der Horizontale in die Vertikale ermöglicht,
und dass diese Winkelausrichtung durch Mittel für die Positionsmarkierung und Verriegelung angepasst werden kann.
